# EUROPEAN PATENT APPLICATION

(11) **EP 1 529 912 A2**
(43) Date of publication of application: **11.05.2005**
(21) Application number: 04380186.9
(22) Date of filing: 23.09.2004
(51) Int. Cl.: E05F 11/48

(54) **Coating sheath for driving cables in power window devices for motor vehicles**

(30) Priority: 06.11.2003 ES 200302548 U
(71) Applicant: Daumal Castellon, Melchor, 08013 Barcelona (ES)
(72) Inventor: Daumal Castellon, Melchor, 08013 Barcelona (ES)
(74) Representative: Morgades Manonelles, Juan Antonio

(57) **Abstract**

It comprises a coating structure inside of which the driving cable is arranged and it is formed of a single layer made of a semirigid plastic material with a low thermal expansion and having an outer diameter ranging from 5 to 7 mm, preferably 6 mm, and an inner diameter ranging from 2.5 to 4 mm, preferably 3 mm.

The sheath has been redesigned simplifying the coating structure thereof which, in conjunction with said dimensions, provides a more effective operation, providing a substantially increased working life thereof.

## Description

The present invention relates to a sheath for driving cables in power window devices for motor vehicles which provides many advantages as will be detailed in the present specification.

It is known that the driving cable in power window devices of motor vehicles is provided with a sheath comprising a coating structure inside of which the cable is arranged. Said coating structure comprises typically a first layer made of a plastic material, an intermediate metal layer comprising an outward coiled strip surrounding said first layer, and a third outer plastic shielding layer surrounding said intermediate layer. Such configuration of the coating structure of the driving cable in power window devices is expensive and it has further disadvantages derived from operation itself of the power window devices such as noises, friction, etc. reducing the working life of the driving cable. An excessive wear of the first or inner layer may result in a direct contact of the metallic intermediate layer with the driving cable. This metal-to-metal contact is deleterious for the proper operation of the power window device further involving damages in said driving cable. The provision of said intermediate layer may lead to promote oxidation of the driving cable of the power window device.

The invention provides redesigning the sheath of the driving cable in a power window device of motor vehicles simplifying the coating structure thereof which, in conjunction with calculated dimensions, provide a more effective operation with regard to driving cable sheaths in power window devices used until recently, providing a substantially increased working life thereof.

The invention thereby provides that the coating structure is formed by a single layer made of a semirigid plastic material. A plastic of a low thermal expansion is preferred, such as polyoxymethylene (POM) due to its good slip coefficient, excellent mechanical properties, its resistance to chemical agents (solvents, grease) and especially due to its degree of elasticity to conform to the driving cable path.

Preferably, said sheath coating structure has an inner diameter ranging from 2.5 to 4 mm and an outer diameter ranging from 5 to 7 mm. The preferred dimensions are: 3 mm inner diameter and 6 mm outer diameter. Dimensions exceeding the above design dimensions could involve that flexion of the sheath to conform to the driving cable path is impossible; while below said values it would involve a not very resistant coating. It is important to keep at least the outer diameter parameters according to the above ranges according to the invention.

The features and the advantages of the sheath for driving cables in power window devices for motor vehicles of the present invention will be clearer from the detailed description of a preferred embodiment thereof which will be given hereinafter by way of non limitative example, with reference to the accompanying drawings, in which:
Fig. 1 is a cutaway elevational view of a sheath for driving cables in a power window device for motor vehicles according to prior art;
Fig. 2 is a cross-sectional view of the sheath for driving cables in a power window device in Fig. 1;
Fig. 3 is a cutaway elevational view of a sheath for driving cables in a power window device for motor vehicles according to the present invention;
Fig. 4 is a cross-sectional view of the sheath for driving cables in a power window device in Fig. 3; and
Fig. 5 is a cutaway elevational view of a power window device of a motor vehicle provided with a sheath as shown in Figs. 3 and 4 according to a possible embodiment of the invention.

Reference numerals used to define the different parts in the embodiments of the invention are as follows:
(10) power window device;
(20) rail of the power window device;
(30) parallelism lower length;
(40a) rising length;
(40b) lowering length;
(50) pulley;
(60) slider;
(70) electric motor;
(100) conventional sheath;
(110) driving cable of a motor vehicle power window device;
(120) first inner layer;
(130) second, intermediate metal layer;
(140) third, outer plastic layer;
(200) sheath of the invention;
(210) coating layer of the sheath (200);
(d1) outer diameter of the sheath of the invention; and
(d2) inner diameter of the sheath of the invention.

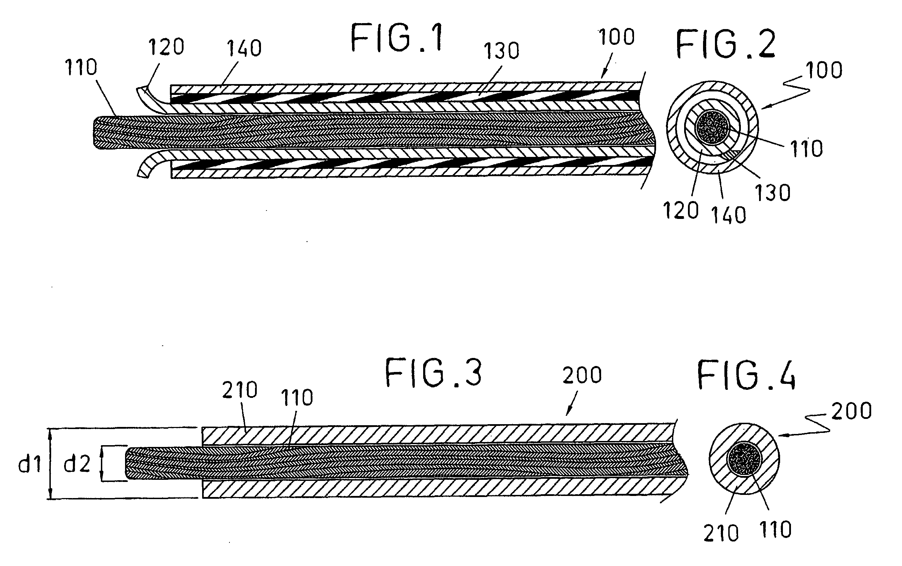

According to Figs. 1 and 2, in the state of the art to which the invention belongs a conventional sheath (100) is used to cover the driving cable (110) in the power window device (10) of a motor vehicle. Said sheath (100) typically comprises a coating structure inside of which said driving cable (110) of the power window device (10) is arranged, as it can be seen from views in Figs. 1 and 2 in the drawings herein attached in the present specification.

The coating structure of the sheath (100) of the state of the art is formed of a first inner layer (120) made of a semirigid material, an intermediate metal layer (130) including a metal coiled strip structure surrounding said first layer (120), and a third outer shielding plastic layer (140) surrounding said intermediate layer (130).

The three-layer configuration of the coating structure of the cable (110) is not advantageous due to high costs and problems of noise, friction, oxidation, etc.

According to Figs. 3 and 4, the sheath (200) in accordance with the invention for the driving cable (110) in a power window device (10) of a motor vehicle has been considerably simplified with regard to conventional sheaths as shown in the example of the above Figs. 1 and 2.

As it can be seen from said Figs. 3 and 4 the coating structure of the driving cable (110) is formed of a single outer layer (210) made of a semirigid plastic material with a low thermal expansion such as, for example, polyacetal (POM).

In the example shown, the coating structure of the sheath (210) of the invention has an outer diameter (d1) of 6 mm and an inner diameter (d2) of 3 mm. These dimensions assure a proper assembly and operation of the power window assembly (10) with reduced costs.

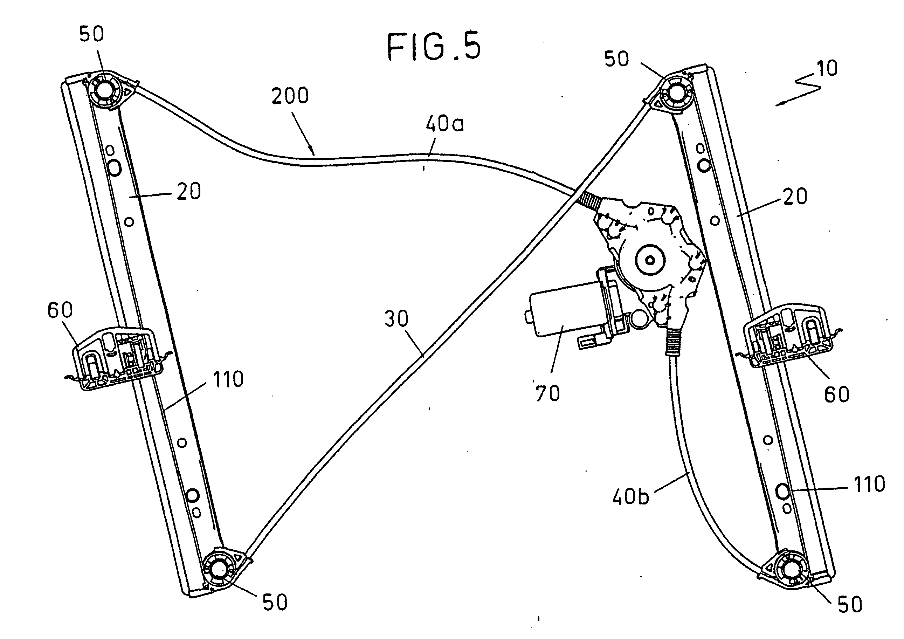

In Fig. 5 of the drawings a power window device (10) of a motor vehicle has been shown. In that example, it has two rails (20) along which the driving cable (110) slides, although it will be understood that it could be also a single-rail power window device. The power window device (10) shown is also provided with pulleys (50) rotatably mounted on said rails (20) cooperating in guiding the driving cable (110). The driving cable (110) forces sliding members (60) to be moved upwards or downwards by means of an electric motor (70). The lower end of the window pane of the motor vehicle (not shown) is attached to said sliding members (60). The driving cable (110) is covered on certain lengths thereof by a sheath. Said sheath may be in its entirety the sheath (200) of the present invention according to the embodiment in Figs. 3 and 4 of the drawings, or it may be provided on any of the three lengths (30, 40a, 40b) according to Fig. 5. It is preferred that the power window device (10) is provided with the sheath (200) of the invention at the very least on the rising length (40a) and on the lowering length (40b) of the driving cable (110), as they correspond to the operating lengths of the assembly. The parallelism lower length (30) may be provided with a sheath of a conventional type or alternatively it may be provided with the sheath of the invention (200).

Once having been sufficiently described what the sheath (200) for driving cables (110) in power window devices (10) of motor vehicles of the present invention consists in accordance to the enclosed drawings, it is understood that any detail modification can be introduced as appropriate, provided that variations may alter the essence of the invention as summarised in the appended claims.

## Claims

1. Coating sheath (200) for driving cables (110) in power window devices (10) for motor vehicles comprising a coating structure inside of which said driving cable (110) is arranged, **characterized in that** said coating structure is formed of a single layer (210) of a semirigid plastic material with a low thermal expansion.

2. Coating sheath as claimed in claim 1, **characterized in that** said coating structure has an outer diameter (d1) ranging from 5 to 7 mm.

3. Coating sheath as claimed in claim 1, **characterized in that** said coating structure has an inner diameter (d2) ranging from 2.5 to 4 mm.

4. Coating sheath as claimed in claim 1, **characterized in that** said coating structure has an outer diameter (d1) of 6 mm and an inner diameter (d2) of 3 mm.
